Europäisches Patentamt

**European Patent Office**

Office européen des brevets

(19)

(11) Publication number : **0 446 335 B1**

## EUROPEAN PATENT SPECIFICATION

(12)

(45) Date of publication of patent specification :
**12.10.94 Bulletin 94/41**

(51) Int. Cl.⁵ : **H04J 3/26**

(21) Application number : **90915014.6**

(22) Date of filing : **23.08.90**

(86) International application number :
**PCT/US90/04759**

(87) International publication number :
**WO 91/05419 18.04.91 Gazette 91/09**

(54) **PACKET/FAST PACKET SWITCH FOR VOICE AND DATA.**

(30) Priority : **29.09.89 US 414792**

(43) Date of publication of application :
**18.09.91 Bulletin 91/38**

(45) Publication of the grant of the patent :
**12.10.94 Bulletin 94/41**

(84) Designated Contracting States :
**AT BE CH DE DK ES FR GB IT LI LU NL SE**

(56) References cited :
**EP-A- 0 228 078**
**EP-A- 0 255 767**
**EP-A- 0 315 158**
**US-A- 4 791 629**
**US-A- 4 896 319**
**COMPUTER COMMUNICATIONS, vol. 1, February 1987, GUILDFORD GB pages 21 - 29 ; D.COFFIELD ET AL: 'TUTORIAL GUIDE TO UNIX SOCKETS FOR NETWORK COMMUNICATIONS'**
**COMPUTER NETWORKS AND ISDN SYSTEMS, vol. 14, no. 2-5, 1988,AMSTERDAM NL, pages 297 - 303 ; F. CANESCHI ET AL: 'AN ARCHITECTURE FOR AN ASN.1 ENCODER/DECODER'**

(73) Proprietor : **MOTOROLA, INC.**
**1303 East Algonquin Road**
**Schaumburg, IL 60196 (US)**

(72) Inventor : **WHITE, Richard, E.**
**2591 College Hill Circle**
**Schaumburg, IL 60193 (US)**
Inventor : **BUCHHOLZ, Dale, R.**
**1852 W. Palm Drive 307**
**Mount Prospect, IL 60056 (US)**
Inventor : **JOHANSON, Lisa, B.**
**3950 Balsam Lane North**
**Plymouth, Minnesota 55441 (US)**
Inventor : **FREEBURG, Thomas, A.**
**416 N. Belmont Avenue**
**Arlington Heights, IL 60004 (US)**

(74) Representative : **Dunlop, Hugh Christopher et al**
**Motorola**
**European Intellectual Property Operations**
**Jays Close**
**Viables Industrial Estate**
**Basingstoke, Hampshire RG22 4PD (GB)**

## Description

Technical Field

This invention pertains to voice/data packet switches and, more particularly, to a packet/fast packet network interface architecture for such switches.

Background of the Invention

Voice and data switches are known in the prior art. Packet switching is also known. In the past, however, synchronization for the control of the devices sending and receiving information packets in a voice/data packet switch has been a problem. This problem has been related to the problem of dynamically allocating the packet bandwidth between the various peripheral devices attached to the switch for voice information and data information. Another related factor has been the network interface architecture for the switch. The network interface architectures of past switches have used the same bus for both data and control. When coupled with the problem of dynamically allocating bandwidth on the bus, this network interface architecture has resulted in the switch having a low switching capacity and throughput. These performance problems become even more significant in the context of modern fast packet protocols. It would be desirable, therefore, to provide a voice/data packet switch with an improved network interface architecture.

From EP-A-0 255 767 and EP-A-0 228 078 there are known communication systems comprising a network interface coupled to at least one peripheral device via a network interface bus, the network interface bus comprising a control bus for communicating control packets, a data bus for communicating data packets, and a data clock line. These known systems address the issue of multicasting packets in a local area network; neither of these known systems addresses the issue of switching in a local area network.

Summary of the Invention

It is an object of the present invention, therefore, to provide a voice/data packet switch with an improved network interface architecture. Therefore, an improved network interface architecture for a packet/fast packet switch is disclosed. This network interface architecture provides for the combination of both voice and data in a single switch using a common packet structure. It allows for the dynamic allocation of bandwidth based on system loading. This includes not only bandwidth within the voice cr data areas of the frame, but also between the voice and data portions. The network interface (NI) provides a means (the NI-Bus) of passing all packets through the Network Interface or allowing the packet devices to directly transfer packets between one another. The bandwidth allocation can easily be changed because the control and data memories are synchronized to one another.

The network interface architecture, according to the invention, allows for the data packets and the control of bandwidth allocation to be controlled by a single switching device. It synchronizes the transfer of the data and the allocation of bus bandwidth. The control of the packet devices can be controlled at a very high bit rate such as, for example, 40 Mbps. It also allows packet devices to directly transfer packets. It allows for easy reallocation of bandwidth through the use of the NI Base Registers.

Brief Description of the Figures

Fig. 1 shows a first embodiment of a packet/fast packet switch for voice and data, including the improved network interface.
Fig. 2 shows the network interface bus for the first embodiment.
Fig. 3 shows a packet.
Fig. 4 is a high-level block diagram for the network interface.
Fig. 5 shows a network interface memory map.
Fig. 6 shows address registers.
Fig. 7 shows processor data memory area for the network interface.
Fig. 8 shows network interface base registers.
Fig. 9 shows a status/control register.
Fig. 10 shows a virtual circuit register.
Fig. 11 is a timing diagram showing the network interface control transfer timing.
Fig. 12 is a timing diagram showing a data transfer from a device to the network interface with no additional bytes.

Fig. 13 is a timing diagram showing a data transfer from a device to the network interface with additional bytes.

Fig. 14 is a timing diagram showing a data transfer from the network interface to a device.

Fig. 15 is a timing diagram showing a data transfer from a device to the network interface with a maximum packet size error or a space available error.

Fig. 16 is a timing diagram showing a data transfer from a device to the network interface with a CRC error.

Fig. 17 is a timing diagram showing a data transfer from a device to the network interface with an address error.

Detailed Description of the Invention

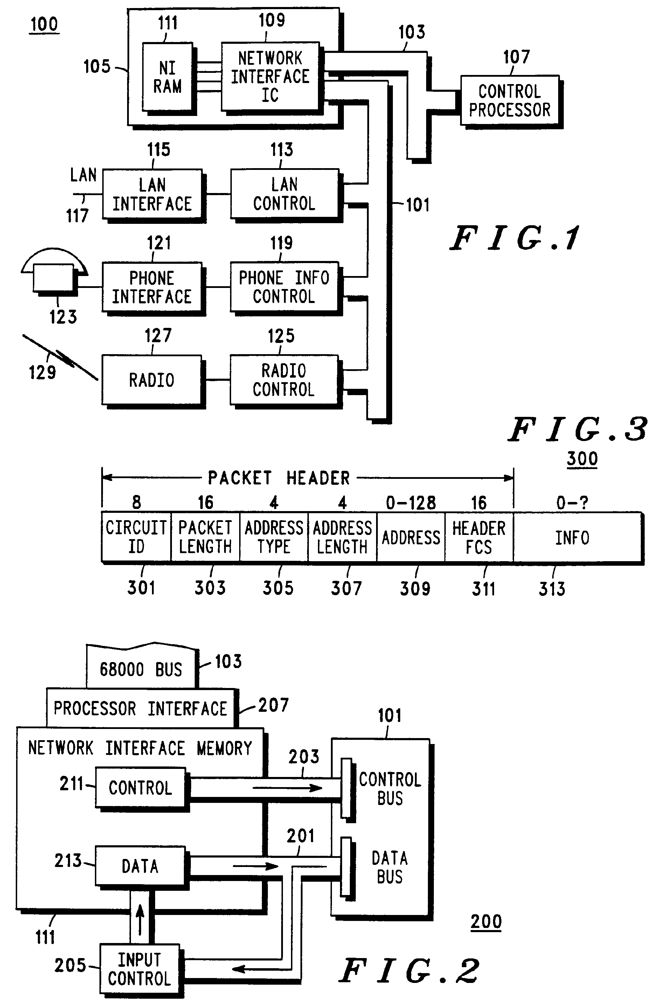

Referring now to Fig. 1, it is seen that the Network Interface 105 is the focus of the LAN device (both Node and UIM). It connects the various interfaces on the LAN (both cable and radio) to one another and to the Control Processor 107, providing time-division and fast-packet switching. Information is transferred among these interfaces via the Network Interface Memory 111 that is accessible both by the control sections of the Network Interface (both input and output), and by the Control Processor 107. Information flow on the LAN side is via the Network Interface Bus (NI-Bus) 101, which is designed to pass data at rates up to, for example, 5 million bytes per second, and to handle the corresponding control information at a similar rate. The microprocessor bus 103 couples the network interface 105 to the control processor 107.

Referring now to Fig. 2, the interaction between the Network Interface Memory 111 and the NI-Bus 101 is shown. The Output Control circuitry, part of the Network Interface chip 109, sequentially steps through the Control memory 211 and presents address and command bytes to the Control Bus 203. This information controls which device is driving the NI-Bus 101 and which device is listening. All NI-Bus devices, including the Network Interface 105, listen to the Control Bus 203 to determine what the activity is on the Data Bus 201. The Output Control circuitry also sequentially steps through the Data memory. If the Network Interface 105 is driving the bus 101, the information in the Data memory 213 will be output to the Data Bus 201. If the Network Interface 105 is listening to the Data Bus 201, the Input Control 205 will accept the data and put it in the proper area of Network Interface Memory 111. The Network Interface 105 can both listen and drive the bus 101 at the same time. This allows the Network Interface 105 to be put in a loopback mode.

Fig. 3 shows the configuration of a standard packet 300. When a start packet signal (described in a later section) is received from a NI-Bus 101 peripheral (for instance, the radio link 125, 127, 129), the first byte 301 received by the Network Interface is the Virtual Circuit ID. This field 301 is used to make a pointer into an area of NI-Memory 111 that holds control information for up to 256 virtual circuits--primarily packet destination addresses. The Input Control uses this information to store the packet information field in the appropriate location in NI-Memory.

The Packet Length field 303 is evaluated next, and checked against the Max Packet Size field in the appropriate Virtual Circuit Register, described in a later section. If the Packet Length is greater than the Max Packet Size, the Info field of the packet will not be stored.

The Address Type field 305 is used as an offset into a field of 16 device Address Registers, each up to 128 bits long. The appropriate Address Register, described in a later section, is then compared against the Address field 309 in the received packet, up to the number of bytes indicated in the Address Length field 307 of the packet. If the address 309 does not match, the Info field 313 is not stored. Note than an address of zero length is always seen as a match, and thus represents an all call.

The CRC checker, in the Network Interface, will check the CRC for the entire packet header including the Header FCS 311. The result of the checker will be zero for a valid header. If the CRC check is invalid, the Network Interface will generate a Packet End signal.

Three conditions must be met in order for the Network Interface 105 to store the Info field into NI Memory 111:

1. The Packet Length 303 in the packet header 315 must be less than or equal to Max Packet Size stored in the Virtual Circuit Register.

2. The Address 309 in the packet header 315 must be equal to the address contained in the Address Register defined by the Address Type 305 for the number of bytes defined by the Address Length 307. Note: The two addresses need not be inherently the same. This allows Group Calls.

3. The CRC check must be valid.

All of these memory areas are defined in a set of NI Base Registers, described in a later section, that are accessible to the Control Processor 107.

Thus, the Control Processor 107 completely defines the output areas of the frame, and the timing and device selection of input areas. It writes the necessary data into the Control area 211, and, where appropriate, puts data into the Data area 213--for instance, the appropriate headers to be transmitted.

Then, the Control Processor 107 sets up the appropriate addresses (read initially from a personality module containing, among other things, the Electronic Serial Number of the particular device), establishes appropriate Virtual Circuit parameters (e.g., a data packet interface to the Control Processor), and sets the appropriate pointers in the Base Registers.

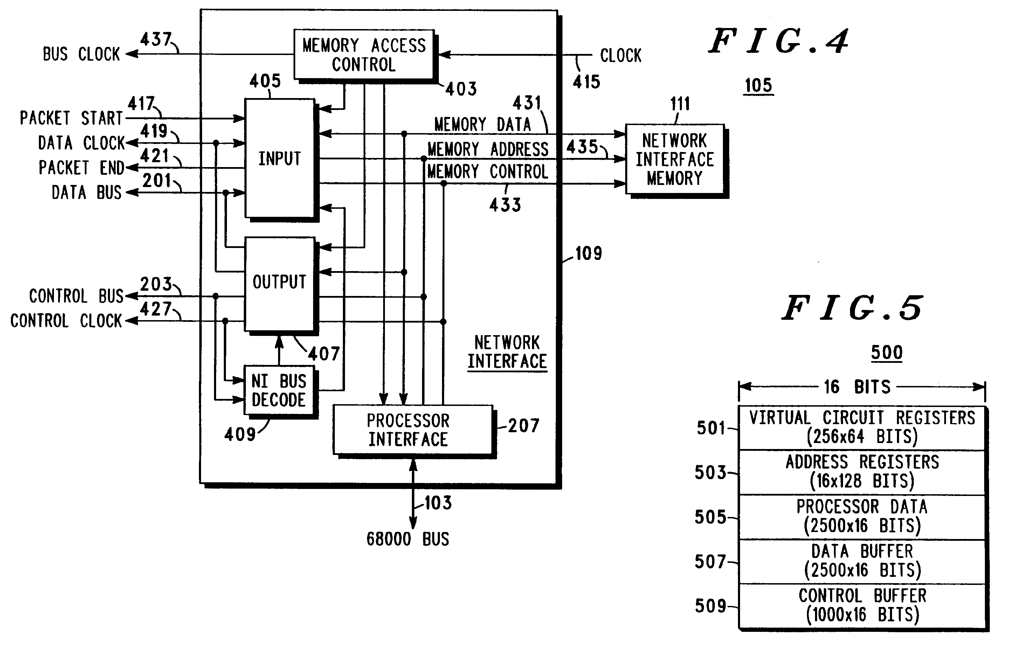

Referring to Fig. 4 there is shown the network interface 105. The Network Interface is made up of six basic blocks: Input 405, Output 407, NI-Bus Decode 409, Memory Access Control 403, Processor Interface 207, and Memory 111. The memory 111 is not currently contained in the Network Interface ASIC 109.

The Input block 405 evaluates the header of the incoming packet and determines what to do with the packet. When a Packet Start indication 417 is received along with the Data Clock 419, the Input section 405 loads the header 315 and determines if the packet 300 is for this device and determines the routing. Once the routing is determined, the information field of the packet is loaded into the proper area in the Network Interface memory 111.

The Input block 405 is connected to the outside world via an 8-bit wide bi-directional data bus, the Network Interface Data Bus 201. The NI Data Bus 201 has a maximum clock rate of 5 MHz. The Data Clock signal 419 indicates when the data is stable. The Packet Start signal 417, in conjunction with the Data Clock signal 419, indicates the first byte of a packet 300. The data bus 201 is the same bus that is connected to the Output block 407. The Network Interface 105 is only able to input from or output to a single interface device at any given time. The Packet End signal 421 is generated by the Network Interface when it has received the last byte of the packet indicated by the Packet Length 303 contained in the packet header 315. This signal 421 is used by the interface devices to determine when additional bytes, such as signal strength information, are to be sent to the Network Interface 105.

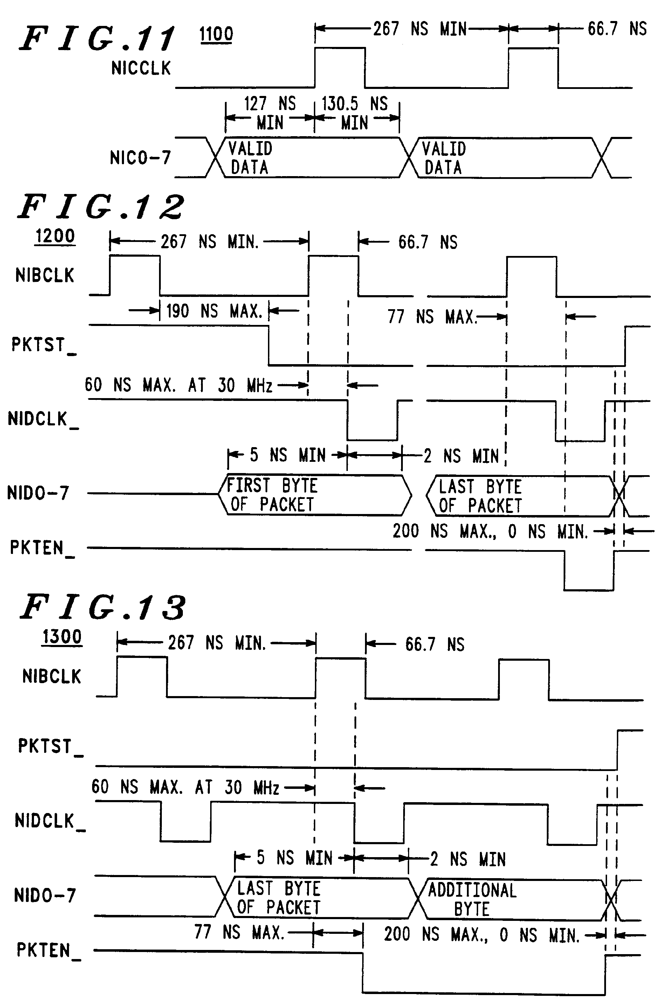

Timing for the NI-Bus 101 signals can be found in Figs. 11-17.

The Input block 405 can address up to 62 interface devices; however, the bus loading limit is 12. The interface devices include radio, LAN, and phone interfaces. Time is allocated during each frame via the NI Control Bus 203 to allow these devices to pass packets between one another.

The Output block 407 performs two major functions. First, it outputs packets from the Network Interface 105 to the interface devices on the NI Data Bus 201 at the proper time during a frame. Secondly, it outputs the control information on the NI Control Bus 203. The NI Control Bus 203 is an 8-bit wide bus at a maximum clock rate of 5 MHz. The Control Clock signal 427 indicates when the control bus 203 is stable, and the Data Clock 419 indicates when the data bus 201 is stable. The Output block 407 cycles through the Data and Control Buffers at the clock rate determined by the Clock Divisor in the NI Base Registers. The position in the Data Buffer is synchronized to the position in the frame via the Sync Offset in the NI Base Registers.

The NI-Bus Decode 409 listens to the addresses and commands on the NI-Bus 101. It decodes all commands that have a broadcast or Network Interface address. It provides control to the Input block 405 to tell it when to listen to the Data Bus 201 and to the Output block 407 to tell it when to drive the Data Bus 201. It also decodes the Skip N Clocks command for the Output block 407.

The Processor Interface block 207 provides the interface between the Control Processor 107 and the Network Interface 105. It also contains the NI Base Registers described in a later section. The Control Processor 107 has to read/write from/to the memory and registers in the Network Interface 105. The Processor Interface 207 allows the Control Processor 107 to access the memory/registers without slowing down the operation of the Network Interface 105. Zero to two wait states may be injected, via DTACK, due to the frequency of Control Processor 107 memory accesses allowed by the Network Interface 105. DTACK is generated for both read and write.

The network interface 105 will occupy a 64K byte space in the Control Processor 107's memory map. The NI Base Registers occupy address hex FC00 through hex FC17 in this space. The Processor Interface 207 will support both byte and word operations on the NI registers and memory. The NI Memory 111 is organized the same way as the 68000 memory.

The Network Interface 105 can interrupt the Control Processor 107 via the INT line. The INT line will be cleared when the Control Processor responds with an interrupt acknowledge, ITACK. The NI 105 has two sources of interrupts. The first is at the start of the frame, and the second is the reception of a packet destined for the Control Processor 107. These interrupts can be enabled and disabled by software.

The Network Interface 105 can be reset via a Reset Line from the Processor 107. This must be part of the power-up sequence. The end result of an NI reset is to guarantee the Control bus 203 will not output any commands. The reset is active low and must be low for at least 1 microsecond.

The definition of the signals contained in the processor interface 207 to the NI 105 can be found in Figs. 11-16.

The Memory Access Control block 403 allocates the appropriate number of Network Interface Memory 111 accesses to the Input 405, Output 407, and Processor Interface 207 blocks. Each block requires a certain maximum number of memory accesses during a byte time (200 nanoseconds). Each block has its maximum number of memory accesses allocated to it every byte time.

The Memory block 111 provides all memory that is required by the Network Interface 105. It not only contains memory for the packets, but also memory for the registers that are required for routing and addressing in the Network Interface 105.

Refer to Fig. 5, which shows a memory map 500 of the memory 111. The memory 111 is divided into five sections: Virtual Circuit Registers 501, Address Registers 503, Processor Data 505, Control Buffer 509, and Data Buffer 507. The header 315 of the incoming packet 300 contains information that, when used in conjunction with the Virtual Circuit Registers and Address Registers, determines the route of the packet through the Network Interface 105. The standard packet 300 is shown in Fig. 3.

The Network Interface 105 can interrupt the Control Processor 107 via the INT line. The INT line will be cleared when the NI receives an interrupt acknowledge, ITACK. The NI can generate two types of interrupts. The first is one at the beginning of every frame. The second is when a packet is received destined for the Control Processor 107. Either one of these interrupts can be disabled by software via the Status/Control Register 900.

The Virtual Circuit Registers 501 are used with the Circuit ID field 301 of an incoming packet 300 to determine where in memory 111 the packet is to be stored. There are a total of 256 Circuit IDs, of which some are reserved for special packets such as reset, frame sync and control data. The Circuit ID 301 contained in the packet is used in conjunction with the Virtual Circuit Register Pointer in the NI Base Registers to determine the address of the Virtual Circuit Register. The contents of the Virtual Circuit Register is used to determine the routing and characteristics of the packet.

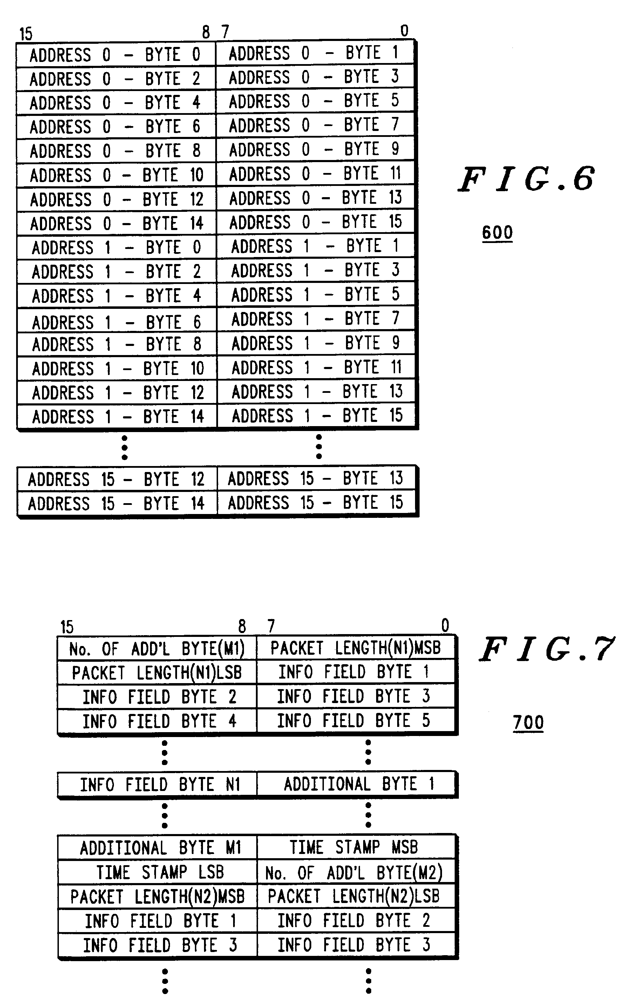

The next section of memory is the Address Registers 503. This section contains 128-bit registers. This allows a device to have multiple addresses of multiple types. The layout 600 of the Address Register Memory 503 is shown in Fig. 6. A device can have sixteen different addresses of varying types, and these addresses can change. 128 bits was chosen because of the requirement of a unique electronic serial number for each device.

An incoming packet 300 contains an Address Type 305, Address Length 307, and Address 309. The Address Type 305 is used in conjunction with the Address Register Pointer in the NI Base Registers to determine the address of the proper Address Register in memory. The Address Length 307 is used to determine how many bytes of the Address Register are read from memory. The bytes read from memory are then compared to the contents of the Address field 309 in the incoming packet. This determines if the packet is being sent to this device. Note that an address of zero length is always seen as a match, and thus represents an all call.

Referring again to Fig. 5, the Processor Data 505 section of memory provides storage for all incoming packets that are destined for the Control Processor 107. The management of this section of memory is more complex than the other sections. It is necessary to store multiple packets in this area of memory during a single frame. The types of packets stored in this section of memory are frame sync, control, casual data, and LAN data.

A circular buffer is used for the Processor Data section of memory 505. It is implemented using pointers in the NI Base Registers. A diagram 700 of the Processor Data 505 section of memory is shown in Fig. 7.

The organization of the packet storage in the Processor Data buffer is also shown in Fig. 7. The following is a list of the information stored in the buffer for each packet, and the order in which it is stored:

1. The number of bytes of additional information that are stored following the Info field of the packet. (1 byte)
2. The length of the Info field of the packet. (2 bytes)
3. The Info field of the packet. (0-2048 bytes)
4. The additional information bytes. (0-7 bytes)
5. The time stamp indicating the time in the frame when the first byte (Circuit ID) of the Packet Header was received. (2 bytes)

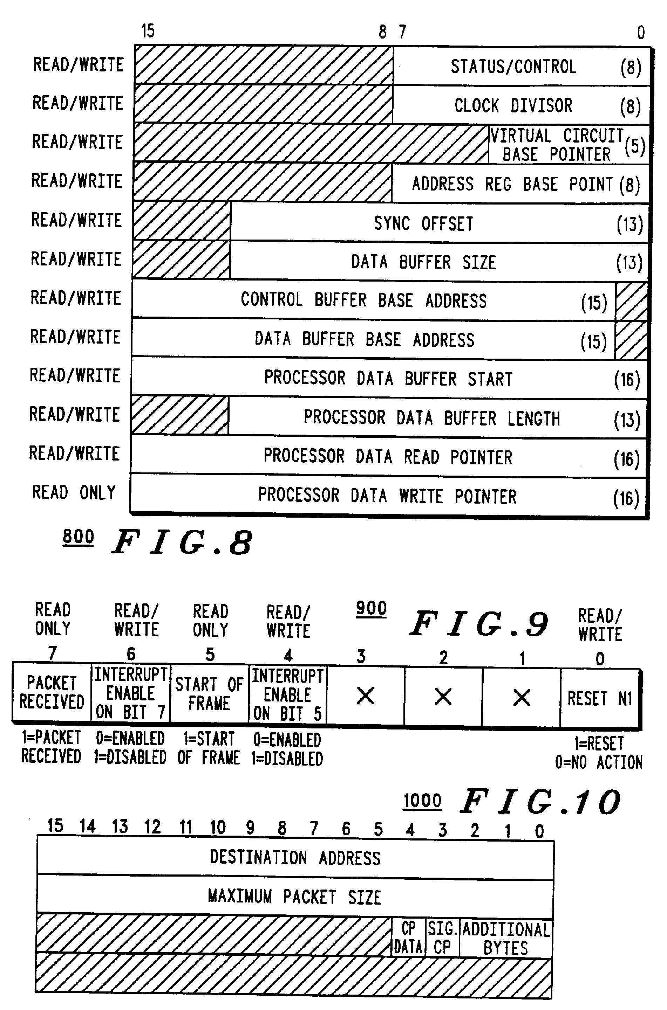

Four registers are defined in the NI Base Register for the Processor Data circular buffer. A diagram 800 of these registers can be found in Fig. 8. The Processor Data Start register contains the address of the first byte of the circular buffer. This register is written by the Control Processor 107 and read by the Network Interface 105. The Processor Data End register contains the address of the last byte of the circular buffer. This register is also written by the Control Processor and read by the Network Interface.

There are two additional registers for the circular buffer. The first is the Processor Data Read register. This register is used by the Control Processor to tell the Network Interface the address of the first byte of the next packet the Control Processor 107 will read. The Control Processor 107 only writes this register after it has read the complete packet. In other words, the Processor Data Read register will always point to the first byte of packet. The last register is the Processor Data Write register. This register is used by the Network Interface to point to the address that will be written into. It is written by the Network Interface 105 and read by the Control Processor 107.

The Network Interface 105 will check to determine if there is space in the buffer to write a packet before it is written. If there is not enough space, the packet will not be stored.

Referring again to Fig. 5, the Control Buffer 509 provides storage for the address/command bytes used to control the NI Data Bus 201. The address of the Control Buffer is determined by the Control Buffer Address Register in the NI Base Registers. The buffer is loaded with the appropriate address/command bytes by the Control Processor 107. It is accessed at the same rate as the clock for the output data on the NI Data Bus 201. The buffer is reset to its starting location, the address contained in the Control Buffer Address Register, at the same time as the Data Buffer is reset. This allows for synchronization between the Control and Data Buffers.

Referring still to Fig. 5, the last section of memory is the Data Buffer 507. The buffer contains the same number of bits as the frame. For a 1-millisecond frame at 40 Mbps, the Data Buffer contains 40,000 bits, or 5,000 bytes. The address of the Data Buffer is determined by the Data Buffer Address Register in the NI Base Registers, and the size by Data Buffer Size Register.

Packets are written into the Data Buffer 507 by the Input block 405 or the Control Processor 107. When a path (virtual circuit ID) is established, the Control Processor writes the packet header 315 into the Data Buffer 507. The Input block 405 will only transfer the info field 313 of the incoming packet 300. The Control Processor 107 writes the entire packet for control, casual, and LAN data.

The control processor 107 is responsible for initializing the Network Interface Base Registers, Virtual Circuit Registers, and the Address Registers. As routing changes, it has to update the Virtual Circuit Registers. It is also responsible for writing the packet header into the Data Buffer for all outgoing packets.

A set of registers is used to program the Network Interface 105. They control the addresses of the output buffer, address registers, and virtual circuit registers, the synchronization of the frame, the size of the output buffer, the speed of the output clock, and interrupts. The Network Interface Base Registers consist of twelve consecutive 16-bit registers located at hex addresses FC00 through FC!7 in the NI memory space, but are not contained in the NI Memory. A diagram 800 of the registers is shown in Fig. 8.

The Status/Control Register 900 is shown in Fig. 9. The Status/Control Register 900 is used to enable interrupts and also to identify what type of interrupt has occurred. The register is read/write and is bits 0 through 7 of the first NI Base Register.

Referring now to Fig. 9, it is seen that bit 6 is used to enable the Packet Received interrupt 901. If bit 6 is set to a 1, an interrupt will occur when a packet is received and the Signal CP bit is set in the Virtual Circuit Register. Bit 7 is set to 1 when the entire packet has been received and the Signal CP bit is set in the Virtual Circuit Register. Bit 7 in the Status/Control Register 900 is cleared after being read by the CP.

Bit 4 is used to enable the Start of Frame interrupt. If bit 4 is set to a 1, an interrupt will occur when the NI 105 reaches the beginning of the frame. Bit 5 will be set to a 1 to indicate that the interrupt was caused by a Start of Frame. Bit 5 in the Status/Control Register 900 is cleared after being read by the CP.

Both the Packet Received and Start of Frame interrupts will be the same interrupt level to the Control Processor. The CP will have to read the Status/Control Register 900 to determine which caused the interrupt.

Bit 1 in the Status/Control Register 900 is used to reset the Network Interface 105. This is the same as a power-up reset. The end result of an NI reset is to guarantee the Control Bus 203 will not output any addresses. The NI can also be reset via a Reset Line from the Control Processor 107.

The CP writes a one to bit 0 in the Status/Control Register 900. This causes the NI 105 to reset and disable the Control Bus 203. The Control Bus 203 remains disabled until the CP 107 writes a zero to bit 0 in the Status/Control Register 900.

The Clock Divisor Register determines the bit rate of the output of the Network Interface 105. Bits 0 through 7 of the second NI Base Register contains the divisor of the output clock. The register is read/write. The Clock Divisor can be any value between 00000000 and 11111111. Table 1 contains preferred values for the clock divisor and the corresponding bit rate.

|     Clock Divisor Value | Bit Rate |
|---|---|
| 00000001 | 40 Mbps |
| 00000010 | 20 Mbps |
| 00000100 | 10 Mbps |
| 00001000 | 5 Mbps |
| 00010000 | 2.5 Mbps |
| 00100000 | 1.25 Mbps |

Table 1 - Typical Clock Divisors

The Sync Offset Register is used to synchronize the Data and Control Buffers to the system frame. Bits 0 through 12 of the third NI Base Register contain the Sync Offset and are read/write. A Frame Sync packet contains the position of the packet in the frame. When the packet 300 is received, the position in the Data Buffer 507 is stored with the packet. The Control Processor 107 compares the two values to determine if the Data Buffer is in sync with the frame. If not, the Control Processor 107 loads an offset value into the Sync Offset Register. This register is used to load the Data Buffer Counter at the end of the Data Buffer 507. After the Sync Offset Register is loaded into the Data Buffer Counter, it is cleared by the Network Interface.

The Data Buffer Size Register sets the size of the Data Buffer in bytes. Bits 0 through 12 of the fourth NI Base Register contain the Data Buffer Size and are read/write. The Data Buffer Size, in conjunction with the Clock Divisor, determines the length of the frame. Table 2 shows the preferred Output Buffer size for allowable frame sizes as a function of bit rate. The Data Buffer can be any size, and the maximum is determined by the available NI memory.

The Data Buffer Size is used to determine the end of the frame. The counter that is used to sequence through the Data Buffer is compared to the Data Buffer Size. When the counts are equal, the counter is loaded with the value in the Sync Offset Register, the Data Buffer Address is loaded into the counter used to address the Data Buffer, and the Control Buffer Address is loaded into the counter used to address the Control Buffer.

| Mbps | Frame Length (mS) | | |
|---|---|---|---|
|  | 1 | 2 | 4 |
| 40 | 5000 |  |  |
| 20 | 2500 | 5000 |  |
| 10 | 1250 | 2500 | 5000 |
| 5 | 625 | 1250 | 2500 |
| 2.5 |  | 625 | 1250 |
| 1.25 |  |  | 625 |

Table 2 - Typical Data Buffer Size (bytes)

The Control Buffer Address Register defines the starting location in the Network Interface memory of the Control Buffer. It is the fifth NI Base Register and is read/write. The Control Buffer Address Register is used to change Control Buffers.

The Data Buffer Address Register defines the starting location in the Network Interface memory of the Data Buffer. It is the sixth NI Base Register and is read/write. The Data Buffer Address Register is used to change Data Buffers. This register is used in conjunction with the Virtual Circuit Pointer Register to change the structure of the frame.

The Virtual Circuit Register Pointer defines the upper portion of the address for the Virtual Circuit Registers. It is bits 11 through 15 of the seventh NI Base Register and is read/write. It provides bits 11 through 15 of the address for the Virtual Circuit Registers' area of memory in the Network Interface memory. Bits 3 through 10 are provided by the Virtual Circuit ID in the incoming packet.

The Address Register Pointer defines the upper portion of the address for the Address Registers. It is bits 8 through 15 of the eighth NI Base Register and is read/write. It provides bits 8 through 15 of the address for the Address Registers' area of memory in the Network Interface memory. Bits 4 through 7 are provided by the Address Type field, and bits 0 through 3 are generated based on the value of the Address Length field in the incoming packet header.

The Processor Data Buffer Start register defines the start of the section of NI Memory that is used to store data that is destined for the Control Processor. It is bits 0 through 15 of the ninth NI Base Register and is read/write. The Processor Data area of NI Memory is a circular buffer, and this register defines the top of the buffer.

The Processor Data Buffer End register defines the end of the section of NI Memory that is used to store data that is destined for the Control Processor. It is bits 0 through 15 of the tenth NI Base Register and is read/write. The Processor Data area of NI Memory is a circular buffer, and this register defines the bottom of the buffer.

The Processor Data Read Pointer register defines the address of the next packet in the Processor Data area of NI Memory to be read by the Control Processor. It is bits 0 through 15 of the eleventh NI Base Register and is read/write. The Control Processor will write this address only after the packet has been completely read out of NI Memory. After a complete packet is read, the CP will write the address of the next packet into the Processor Data Read register. The address contained in the Processor Data Read register will always address the beginning of a packet in NI Memory.

The Processor Data Write Pointer register defines the next address in the Processor Data area of memory that will be written into by the Network Interface. It is bits 0 through 15 of the twelfth NI Base Register and is read only. The Network Interface updates this register as packets are written into the Processor Data area of NI Memory. The NI will check this register against the Processor Data Read Pointer register to prevent the information from being overwritten.

The parameters of the Virtual Circuit are contained in the Virtual Circuit Registers in the Network Interface Memory. There is a bank of 256 Virtual Circuit Registers arranged consecutively in memory addressed by a pointer in the NI Base Registers. The contents of the registers are shown in Fig. 9. The registers are used by the Circuit ID field of an incoming packet to determine where in memory the packet is to be stored, the maximum allowable packet length, how many bytes will be sent after the end of the packet, if the packet is destined for the Control Processor, and if the Control Processor is to be interrupted. There are a total of 256 Circuit IDs; some are reserved for special packets such as reset, frame sync, and control data. The Circuit ID contained in the packet is an offset to the address of the proper Virtual Circuit Register.

Referring now to Fig. 10, the Destination Address in the Virtual Circuit Register 1000 defines where in the Network Interface memory 111 the Info field 313 of incoming packet 300 will be stored. It is the first word in the Virtual Circuit Register 1000. The Destination Address is the address in NI memory 111 of the start of the storage area for a packet with a given Virtual Circuit ID.

The Maximum Packet Size field identifies the largest packet that will be transferred for a given Virtual Circuit ID. It is contained in bits 0 through 15 of the second word of the Virtual Circuit Register 1000. The Maximum Packet Size is used as a safeguard to keep a packet 300 from overwriting memory. If the Packet Length 303 is greater than the Maximum Packet Size, the Info field 313 of the packet 300 will not be stored, and the Network Interface will generate a Packet End signal 421. See the timing diagrams in Figs. 11-17.

In order to keep an invalid Virtual Circuit ID from overwriting memory, the Maximum Packet Size for all unused Circuit IDs should be set to zero by the Control Processor 107.

The Additional Bytes Expected field defines the number of bytes that will follow the end of the information field 313 of the packet 300. It is contained in bits 0 through 2 of the third word of the Virtual Circuit Register 1000.

There can be zero to seven bytes following the info field 313. This information is sent immediately following the end of the packet 300. The NI-Bus 101 devices start sending the bytes, if any, after the Packet End line 421 goes from low to high. Packet End 421 will remain high until all additional bytes have been received or Packet Start 417 goes low. The device has to still generate the Data Clock signal 419 for each of the additional bytes. See the timing diagrams in Figs. 11-17.

The Signal CP Flag is used to determine if a packet for a given Virtual Circuit ID should generate a signal to the processor 107. This is useful if the packet is being written into the Processor area of the Network Interface Memory 111. The flag is bit 3 of the third word of the Virtual Circuit Register 1000. If this bit is 1, bit 7 (901) of the Status/Control Register 900 will be set to a 1 when a packet is written into the processor area of the NI Memory 111. If bit 6 (903) of the Status/Control Register 900 is set to a 1, an interrupt will be generated to the Control Processor 107.

The CP Data Flag indicates if a packet with this Circuit ID is destined for the Control Processor 107. If the flag is One, the Info field 313 of the packet 300 will be written into the Processor area of the NI Memory 111, and the address contained in the Destination Address will be ignored. The flag is bit 4 of the third word of the Virtual Circuit Register 1000.

The Encryption Type field defines the type of encryption to be used for a given Virtual Circuit. The field is bits 5 and 6 of the third word in the Virtual Circuit Registers. Currently, the only encryption type that is defined is 00, which is no encryption. For the prototype, the Network Interface 105 will not be required to do anything with these bits.

The Network Interface Bus 101 (NI-Bus) Signals are described below.

The Data Bus 201 comprises 8 lines designated ND0 through ND7. - These 8 three-state, bi-directional lines are the path for transferring data between the Network Interface 105 and peripheral devices connected to the NI-Bus 101.

The Control Bus 203 comprises 8 lines designated NC0 through NC7 - These 8 three-state output lines are for addressing/commanding devices connected to the NI-Bus 101.

The Control Clock (CCLK) line 427's output signal, when high, indicates that there is valid Control information on the Control Bus 203.

The Data Clock (DCLK) line 419's signal, when high, indicates that there is valid data on the NI Data Bus 201. The device driving the NI Data Bus 201 is responsible for driving this signal.

The Packet Start (PS) 417's input signal goes high and remains high while data is being sent from a peripheral device. The signal 417 will go low after Packet End 421 signal goes low. The device driving the Data Bus 201 drives the Packet Start signal 417.

The Packet End (PE) 421's output signal goes high to inform the peripheral device that all valid packet data has been received and that extra data bytes, if any exist, may be transmitted. The signal 421 goes low when all additional bytes have been received. The signal will go high if a Max Packet Size or CRC error occurs.

The Timing Specification is described as follows: Refer to Figs. 11-17.

Fig. 11 shows the network interface control transfer timing.

Fig. 12 shows the timing for a data transfer from a device to the network interface with no additional bytes.

Fig. 13 shows the timing for a data transfer from a device to the network interface with additional bytes.

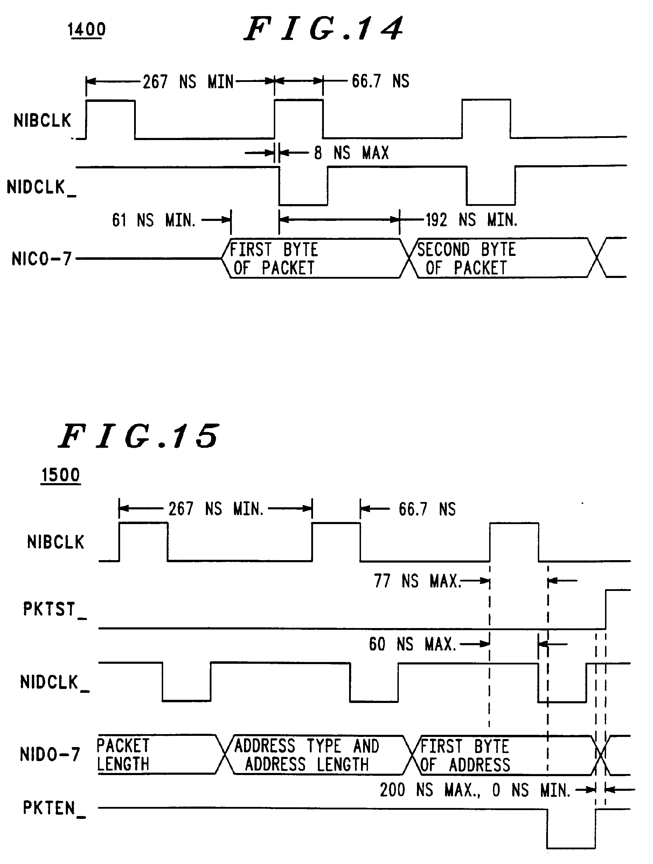

Fig. 14 shows the timing for a data transfer from the network interface to a device.

Fig. 15 shows the timing for a data transfer from a device to the network interface with a maximum packet size error or a space available error.

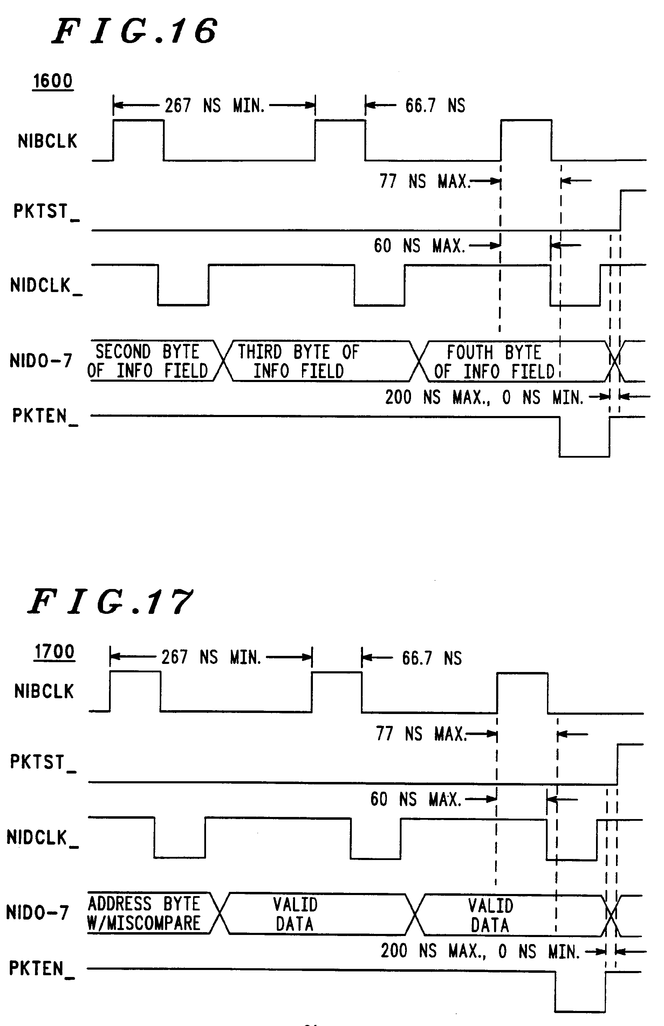

Fig. 16 shows the timing for a data transfer from a device to the network interface with a CRC error.

Fig. 17 shows the timing for a data transfer from a device to the network interface with an address error.

The maximum rise and fall times for CCLK 427, DCLK 419, PS 417, and PE 421 are 5 nanoseconds. Rise and fall times are from 10% to 90%. All times are typical unless otherwise noted.

While various embodiments of a packet/fast packet switch for voice and data, according to the invention, have been described herein, the scope of the invention is defined by the following claims.

## Claims

1. A communication system (100) comprising a network interface (105) coupled to at least one peripheral device via a network interface bus (101), the network interface bus comprising a control bus (203) for communicating control packets, a data bus (201) for communicating data packets and a data clock line (419),

   the communication system characterized by:

   the network interface bus further comprising a packet start line (417), a packet end line (421), a control bus line (203), and a control clock line (427), said network interface coupled to a control processor (107) via a processor bus (103).

2. The system (100) of claim 1 further characterized by:

   said network interface (105) comprising an input means (405) for evaluating the header of an incoming packet and determining what to do with the packet and for addressing interface devices, coupled to said data bus (201), said packet start line (417), said data clock line (419), and said packet end line (421), an output means (407) for outputting packets from the network interface and for outputting control information on the control bus, coupled to said control bus line (203) and said control clock line (427), an NI bus decode means (409) for decoding commands, coupled to said control bus line (203), said control clock line (427), said input means (405) and said output means (407), memory access control means (403) for allocating memory accesses to the input means, output means, and processor interface means (207), coupled to said input means and said output means, processor interface means (207) for interfacing between the control processor (107) and the network interface (105); coupled to said memory access control means, and memory means (111) coupled to said input means, said output means, and said processor interface means.

3. The system (100) of claim 2 further characterized by:
said input means (405) including means for evaluating the header of an incoming packet, means responsive to receiving a packet start indication (417) along with a data clock indication (419) for loading the header and determining the routing, and means responsive to said routing being determined for loading the information field of the packet into said memory (111).

4. The system (100) of claim 3 further characterized by:
said output means (407) including means for outputting packets to said at least one peripheral device on said data bus (201) and means for outputting control information on said control bus (203).

5. The system (100) of claim 4 further characterized by:
said NI bus decode means (409) including means for listening to the addresses and commands on said NI bus (101), means for decoding all commands that have a broadcast or Network Interface address, means for providing control to said input means (405) indicating when to receive data via said data bus (201), and means for providing control to said output means indicating when to drive the data bus (201).

6. The system (100) of claim 5 further characterized by:
said memory access control means (403) including means for allocating the appropriate number of NI memory accesses to said input means (405), said output means (407), and said processor interface means (207).

7. The system (100) of claim 6 further characterized by:
said processor interface means (207) including means for interfacing between said control processor (107) and said network interface (105), said processor interface means further including NI base register means.

8. The system (100) of claim 7 further characterized by:
said memory means (111) including means for providing memory required by said network interface (105), including memory for said packets, and memory for registers required for routing and addressing.

9. The system (100) of claim 8 further characterized by:
said memory means (111) further comprising memory sections comprising virtual circuit register means (501), address register means (503), processor data means (505), control buffer means (509), and data buffer means (507); the virtual circuit register means used to determine where in the memory means (111) an incoming packet is to be stored; the address register means allowing a device to have multiple addresses of multiple types; the processor data means providing storage for all incoming packets that are destined for the control processor (107); the control buffer means providing storage for address/command bytes used to control the data bus (201); the data buffer means used for buffering a frame.

10. A method for a device to process a packet that it has received via a bus in a communications system (100) according to claim 1 having a plurality of devices (113, 119, 125) coupled to each other via a bus (101), and wherein the devices communicate with each other by sending and receiving packets (300) on the bus, each packet comprising a circuit identification (ID) field (301), a packet length field (303), an address type field (305), an address length field (307), an address (309), a frame-check sequence field (311) and an information field (313), the method comprising by the step of:
(a) using the contents of the address type field (305) to determine the address of the proper address register (503) in a memory (111);
the method further characterized by the steps of:
(b) using the contents of the address length field (307) to determine how many bytes of the address register are read from the memory (111);

(c) comparing the contents of the bytes read from the memory as in (b) with the contents of the address field (309);

(d) based at least in part on the comparison as in (c), determining if the packet (300) is being sent to the device.

**Patentansprüche**

1. Ein Verbindungssystem 100 umfassend eine Netzschnittstelle (105), die mit wenigstens einer Peripherieeinrichtung über einen Netzschnittstellen-Bus (101) gekoppelt ist, wobei der Netzschnittstellen-Bus einen Steuer-Bus (203) zur Übertragung von Steuerpaketen, einen Daten-Bus (20) zur Übertragung von Datenpaketen und eine Datentaktleitung (419) umfaßt, wobei das Verbindungssystem **dadurch gekennzeichnet** ist, daß

   der Netzschnittstellen-Bus ferner eine Paketstartleitung (417), eine Paketendeleitung (421), eine Steuerbusleitung (203) und eine Steuertaktleitung (427) umfaßt, wobei die genannte Netzschnittstelle mit einem Steuerprozessor (107) über einen Prozessor-Bus (103) gekoppelt ist.

2. Das System (100) des Anspruchs 1, das ferner **dadurch gekennzeichnet** ist, daß die genannte Netzschnittstelle (105) umfaßt eine Eingangseinrichtung (405) zum Auswerten des Vorlaufabschnitts eines hereinkommenden Pakets und zum Bestimmen, was mit diesem Paket zu geschehen hat, und zum Adressieren von Schnittstelleneinrichtungen, die mit dem genannten Daten-Bus (201) gekoppelt sind, die genannte Paketstartleitung (417), die genannte Datentaktleitung (419), und die genannte Paketendeleitung (421), eine Ausgangseinrichtung (407) zum Ausgeben von Paketen von der Netzschnittstelle und zum Ausgeben von Steuerinformationen auf den Steuer-Bus, der mit der genannten Steuerbusleitung (203) und der genannten Steuertaktleitung (427) gekoppelt ist, eine Decodiereinrichtung (409) für den Netzschnittstellen-Bus zum Decodieren von Befehlen, die mit der genannten Steuerbusleitung (203) gekoppelt ist, die genannte Steuertaktleitung (427), die genannte Eingangseinrichtung (405) und die genannte Ausgangseinrichtung (407), eine Speicherzugriffs-Steuereinrichtung (403) zum Zuordnen von Speicherzugriffen an die Eingangseinrichtung, die Ausgangseinrichtung und eine Prozessorschnittstelleneinrichtung (207), die mit der genannten Eingangseinrichtung und der genannten Ausgangseinrichtung gekoppelt ist, eine Prozessorschnittstelleneinrichtung (207) zum Bilden einer Schnittstelle zwischen dem Steuerprozessor (107) und der Netzschnittstelle (105), die mit der genannten Speicherzugriffs-Steuereinrichtung gekoppelt ist, und eine Speichereinrichtung (111), die mit der genannten Eingangseinrichtung, der genannten Ausgangseinrichtung und der genannten Prozessorschnittstelleneinrichtung gekoppelt ist.

3. Das System (100) des Anspruchs 2, ferner **dadurch gekennzeichnet**, daß die genannte Eingangseinrichtung (405) enthält eine Einrichtung zum Auswerten des Vorlaufabschnitts eines hereinkommenden Pakets, eine Einrichtung, die auf das Erhalten einer Paketstartangabe (417) zusammen mit einer Datentaktangabe (419) zum Laden des Vorlaufabschnitts und zum Bestimmen des Leitwegs, und eine Einrichtung, die auf den genannten Leitweg reagiert und zum Laden des Informationsfeldes des Pakets in den genannten Speicher (111) bestimmt ist.

4. Das System (100) des Anspruchs 3, ferner **dadurch gekennzeichnet**, daß die genannte Ausgangseinrichtung (407) eine Einrichtung zum Ausgeben von Paketen an die genannte wenigstens eine Periphereinrichtung auf dem genannten Daten-Bus (201) und eine Einrichtung zum Ausgeben von Steuerinformationen auf den genannten Steuer-Bus (203) einschließt.

5. Das System (100) des Anspruchs 4, das ferner **dadurch gekennzeichnet** ist, daß die genannte Decodiereinrichtung (409) für den Netzschnittstellen-Bus einschließt eine Einrichtung zum Hören auf die Adressen und Befehle auf dem genannten Netzschnittstellen-Bus (101), eine Einrichtung zum Decodieren aller Befehle, die eine Rundschreib- oder Netzschnittstellenadresse haben, eine Einrichtung zum Bereitstellen einer Steuerung an die genannte Eingangseinrichtung (405), die angibt, wenn Daten über den genannten Daten-Bus (201) zu empfangen sind, und eine Einrichtung zum Bereitstellen einer Steuerung für die genannte Ausgangseinrichtung, die anzeigt, wenn der Daten-Bus (201) anzusteuern ist.

6. Das System (100) des Anspruchs 5, ferner **dadurch gekennzeichnet**, daß

die genannte Speicherzugriffs-Steuereinrichtung (403) eine Einrichtung zum Zuordnen der geeigneten Anzahl von Zugriffen zu dem Netzschnittstellenspeicher für die genannte Eingangseinrichtung (405), die genannte Ausgangseinrichtung (407) und die genannte Prozessorschnittstelleneinrichtung (207) enthält.

7. Das System (100) des Anspruchs 6, das ferner **dadurch gekennzeichnet** ist, daß
die genannte Prozessorschnittstelleneinrichtung (207) eine Einrichtung zum Bilden einer Schnittstelle zwischen dem genannten Steuerprozessor (107) und der genannten Netzschnittstelle (105) einschließt, wobei die genannte Prozessorschnittstelleneinrichtung ferner Netzschnittstellen-Basisregistereinrichtungen einschließt.

8. Das System (100) des Anspruchs 7, das ferner **dadurch gekennzeichnet** ist, daß
die genannte Speichereinrichtung (111) eine Einrichtung zum Bereitstellen von Speicher einschließt, der von der genannten Netzschnittstelle (105) verlangt wird, wobei Speicher für die genannten Pakete und Speicher für Register eingeschlossen ist, die zum Leiten und Adressieren benötigt werden.

9. Das System (100) des Anspruchs 8, das ferner **dadurch gekennzeichnet** ist, daß
die genannte Speichereinrichtung (111) ferner Speicherabschnitte umfaßt, die virtuelle Verbindungsregistereinrichtungen (501), Adressenregistereinrichtungen (503), Prozessordateneinrichtungen (505), Steuerpuffereinrichtungen (509) und Datenpuffereinrichtungen (507) umfassen; die virtuelle Verbindungsregistereinrichtungen verwendet werden, um zu bestimmen, wo ein hereinkommendes Paket in der Speichereinrichtung (111) gespeichert werden soll; die Adressenregistereinrichtungen einer Einrichtung gestatten, mehrere Adressen unterschiedlicher Arten zu haben; die Prozessordateneinrichtungen Speicher für alle hereinkommenden Pakete bereitstellen, die für den Steuerprozessor (107) bestimmt sind; die Steuerpuffereinrichtungen Speicher für Adressen/Befehls-Byte bereitstellen, die verwendet werden, den Daten-Bus (201) zu steuern; die Datenpuffereinrichtungen zum Puffern eines Übertragungsblocks verwendet werden.

10. Ein Verfahren für eine Einrichtung, ein Paket zu verarbeiten, das sie über einen Bus in einem Übertragungssystem (100) erhalten hat, gemäß Anspruch 1, wobei es eine Vielzahl von Einrichtungen (113, 119, 125) aufweist, die miteinander über einen Bus (101) gekoppelt sind, und in dem die Einrichtungen miteinander durch Senden und Empfangen von Paketen (300) auf dem Bus in Verbindung sind, wobei jedes Paket ein Feld (301) zur Verbindungskennung (ID), ein Paketlängefeld (303), ein Adressentypfeld (305), ein Adressenlängefeld (307), eine Adresse (309), ein Prüfabfolgefeld (311) für einen Übertragungsblock und ein Informationsfeld (313) umfaßt, wobei das Verfahren die Schritte umfaßt:
(a) Verwenden der Inhalte des Adressentypfelds (305), um die Adresse des richtigen Adressenregisters (503) in einem Speicher (111) zu bestimmen;
wobei das Verfahren ferner durch die Schritte gekennzeichnet ist:
(b) Verwenden der Inhalte des Adressenlängefelds (307), um zu bestimmen, wieviele Byte des Adressenregisters von dem Speicher (111) gelesen werden;
(c) Vergleichen der Inhalte der aus dem Speicher gemäß (b) gelesenen Byte mit den Inhalten des Adressenfeldes (309);
(d) Bestimmen, zumindest zum Teil auf der Grundlage des Vergleichs gemäß in (c), ob das Paket (300) zu der Einrichtung geschickt wird.

## Revendications

1. Système de communication (100) comprenant une interface de réseau (105) couplée à au moins un dispositif périphérique via un bus d'interface de réseau (101), le bus d'interface de réseau comprenant un bus de commande (203) pour la communication de paquet de commande, un bus de données (201) pour la communication de paquets de données et une ligne d'horloge de données (419),
système de communication caractérisé par le fait que le bus d'interface de réseau comprend, de plus, une ligne de début de paquet (417), une ligne de fin de paquet (421), une ligne de bus de commande (203) et une ligne d'horloge de commande (427), ladite interface de réseau étant couplée à un processeur de commande (107) via un bus de processeur (103).

2. Système (100) selon la revendication 1, caractérisé, de plus, par le fait que ladite interface de réseau (105) comprend un moyen d'entrée (405) pour évaluer l'entête d'un paquet entrant et pour déterminer le traitement du paquet et l'adressage des dispositifs d'interface, couplés audit bus de données (201), à ladite ligne de début de paquet (417), à ladite ligne d'horloge de données (419) et à ladite ligne de fin de paquet (421), un moyen de sortie (407) pour générer des paquets de l'interface de réseau et pour générer une information de commande sur le bus de commande, couplé à ladite ligne de bus de commande (203) et à ladite ligne d'horloge de commande (427), un moyen de décodage de bus NI (409) pour décoder des commandes, couplé à ladite ligne de bus de commande (203), à ladite ligne d'horloge de commande (427), audit moyen d'entrée (405) et audit moyen de sortie (407), un moyen de commande d'accès en mémoire (403) pour allouer des accès en mémoire au moyen d'entrée, au moyen de sortie et au moyen d'interface de processeur (207) couplé audit moyen d'entrée et audit moyen de sortie, un moyen d'interface de processeur (207) pour assurer l'interface entre le processeur de commande (107) et l'interface de réseau (105), couplé audit moyen de commande d'accès en mémoire et un moyen de mémoire (111) couplé audit moyen d'entrée, audit moyen de sortie et audit moyen d'interface de processeur.

3. Système (100) selon la revendication 2, caractérisé, de plus, par le fait que ledit moyen d'entrée (405) comprend un moyen pour évaluer l'entête d'un paquet entrant, moyen prévu pour recevoir une indication de début de paquet (417) avec une indication d'horloge de données 419) pour le chargement de l'entête et la détermination de l'acheminement et un moyen prévu pour ledit acheminement étant déterminé pour le chargement du champ d'information du paquet dans ladite mémoire (111).

4. Système (100) selon la revendication 3, caractérisé, de plus, par le fait que ledit moyen de sortie (407) comprend un moyen pour générer des paquets vers au moins ledit dispositif périphérique sur ledit bus de données (201) et un moyen pour générer une information de commande sur ledit bus de commande (203).

5. Système (100) selon la revendication 4, caractérisé, de plus, par le fait que ledit moyen de décodage de bus NI (409) comprend un moyen pour surveiller les adresses et les commandes sur ledit bus NI (101), un moyen pour décoder toutes les commandes présentant une transmission ou une adresse d'interface de réseau, un moyen pour fournir une commande audit moyen d'entrée (405) indiquant la réception de données via ledit bus de données (201) et un moyen pour fournir une commande audit moyen de sortie indiquant lorsqu'il faut activer le bus de données (201)

6. Système (100) selon la revendication 5, caractérisé, de plus, par le fait que ledit moyen de commande d'accès en mémoire (403) comprend un moyen pour allouer le nombre adapté d'accès en mémoire NI audit moyen d'entrée (405), audit moyen de sortie (407) et audit moyen d'interface de processeur (207).

7. Système (100) selon la revendication 6, caractérisé, de plus, par le fait que ledit moyen d'interface de processeur (207) comprend un moyen pour assurer l'interface entre ledit processeur de commande (107) et ladite interface de réseau (105), ledit moyen d'interface de processeur comprenant, de plus, un moyen de registre de base NI.

8. Système (100) selon la revendication 7, caractérisé, de plus, par le fait que ledit moyen de mémoire (111) comprend un moyen pour fournir la mémoire requise par ladite interface de réseau (105) comprenant une mémoire pour lesdits paquets et une mémoire pour les registres requis pour l'acheminement et l'adressage.

9. Système (100) selon la revendication 8, caractérisé, de plus, par le fait que ledit moyen de mémoire (111) comprend, de plus, des sections de mémoire comprenant un moyen de registre de circuit virtuel (501), un moyen de registre d'adressage (503), un moyen de données de processeur (505), un moyen de tampon de commande (509) et un moyen de tampon de données (507), le moyen de registre de circuit virtuel étant utilisé pour déterminé l'endroit où doit être stocké un paquet entrant dans le moyen de mémoire (111), le moyen de registre d'adressage permettant à un dispositif d'avoir plusieurs adresses de plusieurs types, le moyen de données de processeur assurant le stockage pour tous les paquets entrant qui sont destinés au processeur de commande (107), le moyen de tampon de commande assurant le stockage des octets d'adressage/commande utilisés pour commander le bus de données (201), le moyen de tampon de données étant utilisé comme tampon de trame.

10. Procédé de traitement d'un paquet reçu via un bus dans un système de communication (100) selon la revendication 1, possédant plusieurs dispositifs (113, 119, 125) couplés l'un à l'autre via un bus (101) et dans lequel les dispositif communiquent en envoyant et en recevant des paquets (300) sur le bus, chaque paquet comprenant un champ d'identification de circuit (ID) (301), un champ de longueur de paquet (303), un champ de type d'adressage (305), un champ de longueur d'adressage (307), une adresse (309), un champ de séquence de vérification de trame (311) et un champ d'information (313), procédé comprenant les étapes suivantes :

(a) l'utilisation du contenu du champ de type d'adressage (305) pour déterminer l'adresse du registre d'adressage correct (503) dans une mémoire (111);

procédé caractérisé, de plus, par les étapes suivantes :

(b) l'utilisation du contenu du champ de longueur d'adressage (307) pour déterminer combien d'octets du registre d'adressage sont lues de la mémoire (111);

(c) la comparaison du contenu des octets lues de la mémoire en (b) avec le contenu du champ d'adressage (309); et

(d) sur la base d'au moins une partie de la comparaison en (c), la détermination de l'envoie du paquet (300) au dispositif.

*100*

111
NI RAM

109
NETWORK INTERFACE IC

105

103

107
CONTROL PROCESSOR

115
LAN INTERFACE

113
LAN CONTROL

LAN

117

101

*FIG.1*

121
PHONE INTERFACE

119
PHONE INFO CONTROL

123

127
RADIO

125
RADIO CONTROL

129

*FIG.3*

*300*

| PACKET HEADER | | | | | | |
|---|---|---|---|---|---|---|
| 8 | 16 | 4 | 4 | 0-128 | 16 | 0-? |
| CIRCUIT ID | PACKET LENGTH | ADDRESS TYPE | ADDRESS LENGTH | ADDRESS | HEADER FCS | INFO |
| 301 | 303 | 305 | 307 | 309 | 311 | 313 |

103
68000 BUS

207
PROCESSOR INTERFACE

101

NETWORK INTERFACE MEMORY

211 — CONTROL

203

CONTROL BUS

213 — DATA

201

DATA BUS

111

205 — INPUT CONTROL

*200*

*FIG.2*

*FIG.4*

105

BUS CLOCK ← 437
CLOCK
415

MEMORY ACCESS CONTROL
403

405

PACKET START 417
DATA CLOCK 419
PACKET END 421
DATA BUS 201

INPUT

431
MEMORY DATA
MEMORY ADDRESS 435
MEMORY CONTROL
433

111
NETWORK INTERFACE MEMORY

109

OUTPUT

CONTROL BUS 203
CONTROL CLOCK 427

407

NI BUS DECODE
409

NETWORK INTERFACE

PROCESSOR INTERFACE 207

103
68000 BUS

*FIG.5*

500

16 BITS

501 ── VIRTUAL CIRCUIT REGISTERS (256x64 BITS)
503 ── ADDRESS REGISTERS (16x128 BITS)
505 ── PROCESSOR DATA (2500x16 BITS)
507 ── DATA BUFFER (2500x16 BITS)
509 ── CONTROL BUFFER (1000x16 BITS)

EP 0 446 335 B1

| 15 | 8 7 | 0 |
|---|---|---|
| ADDRESS 0 – BYTE 0 | | ADDRESS 0 – BYTE 1 |
| ADDRESS 0 – BYTE 2 | | ADDRESS 0 – BYTE 3 |
| ADDRESS 0 – BYTE 4 | | ADDRESS 0 – BYTE 5 |
| ADDRESS 0 – BYTE 6 | | ADDRESS 0 – BYTE 7 |
| ADDRESS 0 – BYTE 8 | | ADDRESS 0 – BYTE 9 |
| ADDRESS 0 – BYTE 10 | | ADDRESS 0 – BYTE 11 |
| ADDRESS 0 – BYTE 12 | | ADDRESS 0 – BYTE 13 |
| ADDRESS 0 – BYTE 14 | | ADDRESS 0 – BYTE 15 |
| ADDRESS 1 – BYTE 0 | | ADDRESS 1 – BYTE 1 |
| ADDRESS 1 – BYTE 2 | | ADDRESS 1 – BYTE 3 |
| ADDRESS 1 – BYTE 4 | | ADDRESS 1 – BYTE 5 |
| ADDRESS 1 – BYTE 6 | | ADDRESS 1 – BYTE 7 |
| ADDRESS 1 – BYTE 8 | | ADDRESS 1 – BYTE 9 |
| ADDRESS 1 – BYTE 10 | | ADDRESS 1 – BYTE 11 |
| ADDRESS 1 – BYTE 12 | | ADDRESS 1 – BYTE 13 |
| ADDRESS 1 – BYTE 14 | | ADDRESS 1 – BYTE 15 |
| ⋮ | | ⋮ |
| ADDRESS 15 – BYTE 12 | | ADDRESS 15 – BYTE 13 |
| ADDRESS 15 – BYTE 14 | | ADDRESS 15 – BYTE 15 |

*FIG.6*

600

| 15 | 8 7 | 0 |
|---|---|---|
| No. OF ADD'L BYTE(M1) | | PACKET LENGTH(N1)MSB |
| PACKET LENGTH(N1)LSB | | INFO FIELD BYTE 1 |
| INFO FIELD BYTE 2 | | INFO FIELD BYTE 3 |
| INFO FIELD BYTE 4 | | INFO FIELD BYTE 5 |
| ⋮ | | ⋮ |
| INFO FIELD BYTE N1 | | ADDITIONAL BYTE 1 |
| ⋮ | | ⋮ |
| ADDITIONAL BYTE M1 | | TIME STAMP MSB |
| TIME STAMP LSB | | No. OF ADD'L BYTE(M2) |
| PACKET LENGTH(N2)MSB | | PACKET LENGTH(N2)LSB |
| INFO FIELD BYTE 1 | | INFO FIELD BYTE 2 |
| INFO FIELD BYTE 3 | | INFO FIELD BYTE 3 |
| ⋮ | | ⋮ |

*FIG.7*

700

| | 15 | 8 7 | 0 |
|---|---|---|---|
| READ/WRITE | ////////// | STATUS/CONTROL | (8) |
| READ/WRITE | ////////// | CLOCK DIVISOR | (8) |
| READ/WRITE | //////////////////// | VIRTUAL CIRCUIT BASE POINTER | (5) |
| READ/WRITE | ////////// | ADDRESS REG BASE POINT | (8) |
| READ/WRITE | /// | SYNC OFFSET | (13) |
| READ/WRITE | /// | DATA BUFFER SIZE | (13) |
| READ/WRITE | CONTROL BUFFER BASE ADDRESS | (15) | // |
| READ/WRITE | DATA BUFFER BASE ADDRESS | (15) | // |
| READ/WRITE | PROCESSOR DATA BUFFER START | | (16) |
| READ/WRITE | /// PROCESSOR DATA BUFFER LENGTH | | (13) |
| READ/WRITE | PROCESSOR DATA READ POINTER | | (16) |
| READ ONLY | PROCESSOR DATA WRITE POINTER | | (16) |

### 800  *FIG.8*

### 900  *FIG.9*

| READ ONLY | READ/ WRITE | READ ONLY | READ/ WRITE | | | | READ/ WRITE |
|---|---|---|---|---|---|---|---|
| 7 | 6 | 5 | 4 | 3 | 2 | 1 | 0 |
| PACKET RECEIVED | INTERRUPT ENABLE ON BIT 7 | START OF FRAME | INTERRUPT ENABLE ON BIT 5 | × | × | × | RESET N1 |
| 1=PACKET RECEIVED | 0=ENABLED 1=DISABLED | 1=START OF FRAME | 0=ENABLED 1=DISABLED | | | | 1=RESET 0=NO ACTION |

### 1000  *FIG.10*

| 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|
| DESTINATION ADDRESS | | | | | | | | | | | | | | | |
| MAXIMUM PACKET SIZE | | | | | | | | | | | CP DATA | SIG. CP | ADDITIONAL BYTES | | |

*FIG.11* <u>1100</u>

NICCLK

267 NS MIN — 66.7 NS

127 NS MIN — 130.5 NS MIN

NIC0-7 — VALID DATA — VALID DATA

*FIG.12*

<u>1200</u>

NIBCLK

267 NS MIN. — 66.7 NS

190 NS MAX.

PKTST_

77 NS MAX.

60 NS MAX. AT 30 MHz

NIDCLK_

5 NS MIN — 2 NS MIN

NID0-7 — FIRST BYTE OF PACKET — LAST BYTE OF PACKET

200 NS MAX., 0 NS MIN.

PKTEN_

*FIG.13*

<u>1300</u>

NIBCLK

267 NS MIN. — 66.7 NS

PKTST_

60 NS MAX. AT 30 MHz

NIDCLK_

5 NS MIN — 2 NS MIN

NID0-7 — LAST BYTE OF PACKET — ADDITIONAL BYTE

77 NS MAX. — 200 NS MAX., 0 NS MIN.

PKTEN_

19

FIG.14
1400

267 NS MIN
66.7 NS

NIBCLK

8 NS MAX

NIDCLK_

61 NS MIN.
192 NS MIN.

NIC0-7    FIRST BYTE OF PACKET    SECOND BYTE OF PACKET

FIG.15
1500

267 NS MIN.
66.7 NS

NIBCLK

77 NS MAX.

PKTST_

60 NS MAX.

NIDCLK_

NIDO-7    PACKET LENGTH    ADDRESS TYPE AND ADDRESS LENGTH    FIRST BYTE OF ADDRESS

200 NS MAX., 0 NS MIN.

PKTEN_

20

EP 0 446 335 B1

# F I G . 16

**1600**

NIBCLK · ← 267 NS MIN. → · ← 66.7 NS

PKTST_ · 77 NS MAX.

NIDCLK_ · 60 NS MAX.

NIDO-7 · SECOND BYTE OF INFO FIELD / THIRD BYTE OF INFO FIELD / FOUTH BYTE OF INFO FIELD

PKTEN_ · 200 NS MAX., 0 NS MIN.

# F I G . 17

**1700**

NIBCLK · ← 267 NS MIN. → · ← 66.7 NS

PKTST_ · 77 NS MAX.

NIDCLK_ · 60 NS MAX.

NIDO-7 · ADDRESS BYTE W/MISCOMPARE / VALID DATA / VALID DATA

PKTEN_ · 200 NS MAX., 0 NS MIN.

21